# DEMANDE DE BREVET EUROPEEN

(11) **EP 0 864 546 A1**
(43) Date de publication de la demande: **16.09.1998**
(21) Numéro de dépôt: 98400589.2
(22) Date de dépôt: 12.03.1998
(51) Int. Cl.: C03C 3/087

(54) **Vitrage résistant au feu**

(30) Priorité: 13.03.1997 DE 19710289
(71) Demandeur: Vetrotech Saint-Gobain, 6318 Walchwil (CH)
(72) Inventeur: Siedel, Horst, 6318 Walchwil (CH); Morin, Claude, 92800 Puteaux (FR); Jeanvoine, Pierre, 78300 Poissy (FR)
(74) Mandataire: Le Cam, Stéphane Georges Elie

(57) **Abrégé**

On utilise, pour la fabrication de vitrages résistants au feu des classes de résistance au feu G, comprenant des vitres en verre trempé par voie thermique au moyen d'une installation de trempe traditionnelle et possédant des propriétés de verre de sécurité, des verres qui présentent un coefficient de dilatation thermique α₂₀₋₃₀₀ compris entre 6 et 8,5.10⁻⁶K⁻¹, un facteur de tension thermique ϕ compris entre 0,5 et 0,8 N/(mm².K), un point de ramollissement compris entre 750 et 830°C et un point de transformation de tout au plus 1190°C.

## Description

La présente invention concerne un vitrage résistant au feu des classes de résistance au feu G, comprenant une vitre en verre au silicate trempée par voie thermique à l'air au moyen d'une installation de trempe traditionnelle et possédant des propriétés de verre de sécurité.

Des vitrages résistants au feu des classes de résistance au feu G ainsi que leurs cadres et leurs fixations doivent résister, lors d'un essai de tenue au feu conforme à la norme DIN 4102 ou à la norme ISO/DIS 834-1, pendant un certain temps au passage du feu et de la fumée. Pendant ce temps, les vitres ne peuvent ni se briser sous l'effet des contraintes qui apparaissent suite aux gradients de température entre la surface de la vitre et le bord enchâssé, ni dépasser leur point de ramollissement, car elles perdraient sinon leur stabilité et libéreraient ainsi l'ouverture. En fonction du temps en minutes pendant lequel elles résistent au feu, elles sont rangées dans les classes de résistance au feu G 30, G 60, G 90 ou G 120.

En général, les vitres résistantes au feu sont maintenues dans des cadres qui protègent, dans une mesure plus ou moins grande, le bord des vitres contre l'effet de la chaleur. Le gradient de température qui apparaît ainsi entre le milieu de la vitre et le bord engendre des contraintes de traction considérables dans la zone marginale et mène à une destruction des vitres, si l'on ne prend pas de mesures particulières pour compenser ces contraintes de traction. Ces mesures consistent en une trempe thermique des vitres permettant d'induire de fortes contraintes initiales de compression dans la zone marginale. La trempe thermique permet de conférer à la vitre des propriétés supplémentaires de verre de sécurité lorsque la trempe est réalisée de telle sorte que, en cas de bris, la vitre se fragmente en menus morceaux.

On peut en principe mesurer la valeur des contraintes initiales à la surface de la vitre et dans la zone marginale par photoélasticimétrie. Cette mesure par photoélasticimétrie est toutefois relativement coûteuse. Dans la pratique, on en est dès lors arrivé à déterminer l'état de contraintes initiales par le biais de la résistance à la flexion/traction obtenue par la trempe, conformément à la norme DIN 52303 ou à la norme EN 12150. Les expériences ont en l'occurrence révélé la nécessité d'assurer une résistance à la flexion/traction d'au moins 120 N/mm² lorsque la vitre doit résister aux contraintes de traction engendrées par les gradients de température au niveau du bord. Vu que des vitres non trempées présentent une résistance de base à la flexion/traction d'environ 50 N/mm², cela signifie qu'il est nécessaire d'augmenter cette résistance, par la trempe, d'au moins 70 N/mm². La valeur de cette augmentation de la résistance à la flexion/traction correspond directement à la valeur des contraintes initiales superficielles de compression.

On peut en outre augmenter le temps de résistance au feu en augmentant la profondeur d'insertion de la vitre dans le cadre. Dans le cas d'une résistance à la flexion/traction de la vitre de 120 N/mm² et d'une profondeur d'insertion de 10 mm, le vitrage est par exemple conforme à la classe de résistance au feu G 30, alors qu'une profondeur d'insertion de 20 mm permet d'atteindre la classe de résistance au feu G 90.

Des vitres en verre flotté habituel (verre de silice à base de soude et de chaux) peuvent être trempées de manière appropriée au moyen d'installations de trempe traditionnelles, vu que ces compositions de verre présentent des coefficients de dilatation thermique relativement élevés supérieurs à 8,5.10⁻⁶K⁻¹. Le verre flotté habituel permet d'atteindre des résistances à la flexion/traction pouvant aller jusqu'à 200 N/mm². Sous l'effet des contraintes de traction engendrées par les gradients de température, les vitres ne se brisent par conséquent pas si la profondeur d'insertion est d'environ 10 mm, mais elles perdent leur stabilité à cause de leur température de ramollissement relativement basse d'environ 730°C. Des vitres trempées en verre flotté sont donc conformes, dans des conditions d'installation normales, tout au plus à la classe de résistance au feu G 30.

Toutefois, on connaît également des vitres monolithiques de la classe de résistance au feu G 60 et de classes plus élevées. Ces vitres sont constituées de compositions ayant une température de ramollissement élevée supérieure à 815°C et présentent, de ce fait, un long temps de résistance lors d'un essai de tenue au feu. Dans ce cas, des verres à base de borosilicate et d'aluminosilicate résistants à la chaleur s'avèrent particulièrement appropriés. Toutefois, ces vitres doivent également être trempées par voie thermique pour pouvoir résister aux fortes contraintes de traction qui apparaissent dans la zone marginale lors d'un essai de tenue au feu.

L'emploi de la trempe thermique pour des vitrages coupe-feu en verres à base de borosilicate ou d'aluminosilicate résistants à la chaleur est connu de par les documents DE 23 13 442 B2 et DE 24 13 552 B2. Suivant ces documents, seuls conviennent pour la trempe des verres dont le produit de la dilatation thermique a et du module d'élasticité E atteint 1 à 5 kp.cm⁻².°C⁻¹, c'est-à-dire des verres à base de borosilicate ou d'aluminosilicate à dilatation thermique de α₂₀₋₃₀₀ = 3 à 6,5.10⁻⁶°C⁻¹. Toutefois, la trempe nécessaire au niveau du bord de ces vitres ne peut être réalisée au moyen des installations de trempe à l'air habituelles, mais fait appel à un procédé particulier dans lequel les vitres sont disposées, au cours du chauffage, entre des carreaux céramiques légèrement plus petits, de telle sorte que le bord de la vitre dépasse des carreaux céramiques et soit donc refroidi plus rapidement, alors que le milieu de la vitre refroidit plus lentement sous l'effet des carreaux céramiques. La trempe nécessaire au niveau du bord peut certes être obtenue de cette manière, mais les vitres ainsi fabriquées ne présentent aucune des propriétés du verre de sécurité.

Il est connu de par le document DE 43 25 656 C2 d'utiliser, pour la fabrication de vitrages coupe-feu monolithiques, des verres qui ont un coefficient de dilatation thermique a compris entre 3 et 6.10⁻⁶K⁻¹, une tension thermique spécifique ϕ comprise entre 0,3 et 0,5 N/(mm².K), un point de ramollissement (= température pour une viscosité de 10^{7,6} dPa.s) supérieur à 830°C et un point de transformation (= température pour une viscosité de 10⁴ dPa.s) comprise entre 1190° et 1260°C. La tension thermique spécifique est la grandeur spécifique au verre calculée à partir du coefficient de dilatation thermique α, du module d'élasticité E et du coefficient de Poisson m suivant la formule ϕ = α.E/(1-m). Des vitres présentant ces propriétés physiques peuvent acquérir, dans une installation de trempe à l'air traditionnelle, aussi bien les contraintes initiales de compression nécessaires au niveau du bord que les contraintes de trempe exercées sur toute la surface et nécessaires pour obtenir une fragmentation en menus morceaux, de sorte qu'aucune mesure particulière n'est nécessaire pour la trempe et que le processus de fabrication en est ainsi considérablement simplifié. Des vitres présentant ces propriétés physiques contiennent toutefois nécessairement du B₂O₃, Al₂O₃ et ZrO₂ en des quantités qui compliquent le processus de fusion et le processus de transformation. Elles ne peuvent pas être fabriquées suivant le procédé de flottage qui a prouvé sa rentabilité exceptionnelle, étant donné que leur point de transformation est trop élevé et que la fusion requiert en outre des mesures particulières.

On connaît de par le document DE 28 18 804 B2 des compositions de verre à base de borosilicate prévues, certes, pour une utilisation dans des vitrages coupe-feu qui, en raison de leur point de transformation relativement bas, peuvent fondre suivant le procédé de flottage et également être trempés au moyen d'installations de trempe habituelles. Ces verres contiennent toutefois 11,5 à 14,5% de B₂O₃ et présentent en outre des propriétés physiques semblables à celles des verres connus de par le document DE 43 25 656 C2. Même dans le cas de ces verres, les contraintes initiales de compression et la résistance à la flexion/traction pouvant être atteintes par la trempe à l'air sont limitées à des valeurs relativement basses et ces verres présentent de surcroît les difficultés et inconvénients connus lors de la fusion de verres à base de borosilicate.

L'invention a pour but de procurer des vitrages coupe-feu monolithiques de la classe de résistance au feu G qui, d'une part, puissent être trempés au moyen des installations de trempe à l'air traditionnelles et qui, d'autre part, aient des compositions de verre qui fondent sans poser de problèmes économiques et technologiques et qui puissent être transformés en verre plat suivant le procédé de flottage habituel, ce verre pouvant être comparé en ce qui concerne son aspect et ses propriétés optiques au verre flotté connu.

Ce but est atteint, conformément à l'invention, par l'utilisation de verres présentant un coefficient de dilatation thermique α₂₀₋₃₀₀ de 6 à 8,5.10⁻⁶K⁻¹, un facteur de tension thermique ϕ de 0,5 à 0,8N/(mm².K), un point de ramollissement (viscosité = 10^{7,6}dPa.s) de 750° à 830°C et un point de transformation (viscosité = 10⁴ dPa.s) de tout au plus 1190°C.

On peut choisir des compositions de verre qui présentent ces propriétés physiques parmi des compositions de verre connues, tout en veillant à ce que ces compositions de verre ne comprennent pas de B₂O₃ et d'Al₂O₃ ou du moins aussi peu que possible.

On a constaté que des verres présentant les propriétés conformes à l'invention non seulement peuvent fondre relativement bien, mais en plus conviennent particulièrement à la fabrication de vitrages coupe-feu monolithiques, dans la mesure où, même dans le cas de la trempe à l'air traditionnelle, ils présentent une résistance à la flexion/traction nettement supérieure à celle des verres à base de borosilicate et d'aluminosilicate connus pour la fabrication de vitrages coupe-feu. Grâce à leur coefficient de dilatation thermique et à leur facteur de tension thermique plus élevés, il est possible, en effet, d'obtenir, au moyen d'installations de trempe habituelles, des résistances à la flexion/traction nettement plus grandes, c'est-à-dire des contraintes initiales de compression nettement plus fortes, de manière à augmenter sensiblement la résistance à la différence de température pouvant être atteinte entre le bord froid encastré et le milieu de la vitre chaud. En outre, il est apparu que la résistance de ces verres était tout à fait suffisante pour satisfaire à la classe de résistance au feu G 30 même dans le cas d'une profondeur d'insertion dans le cadre de 10 mm. Les verres utilisés conformément à l'invention permettent toutefois également d'atteindre les classes supérieures de résistance au feu G 60, G 90 voire même G 120, lorsque, le cas échéant, on utilise des vitres de plus forte épaisseur et un cadre dans lequel elles sont enchâssées plus profondément, c'est-à-dire un cadre qui recouvre le bord de la vitre dans une plus grande mesure, par exemple jusqu'à 25 mm.

D'autres avantages et aspects de réalisation conformes à l'invention, ainsi que d'autres développements de l'invention ressortiront des revendications dépendantes et de la description suivante de différents exemples de réalisation.

### Exemple 1.

On utilise, pour la fabrication du vitrage coupe-feu, une vitre plate d'une épaisseur de 5 mm, fabriquée suivant le procédé de flottage et présentant la composition suivante en % en poids : 75,4% de SiO₂, 11,0% de Na₂O, 12,0% de CaO, 1,0% de Al₂O₃, 0,3% de K₂O, 0,3% d'autres oxydes.

Ce verre présente les propriétés physiques suivantes :

| | |
|---|---|
| coefficient de dilatation thermique α₂₀₋₃₀₀ | = 7,6.10⁻⁶K⁻¹ |
| facteur de tension thermique ϕ | = 0,69 N/(mm².K) |
| module d'élasticité ε | = 7,14.10⁴ N/mm² |
| coefficient de Poisson µ | = 0,215 |
| point de ramollissement Ts | = 761 °C |
| point de transformation Tw | = 1061 °C |

Plusieurs vitres de 90 X 55 cm² sont soumises à un doucissage au niveau des bords et trempées en position horizontale dans une installation de trempe à l'air habituelle. A cette fin, elles sont chauffées à une température d'environ 670°C et refroidies brusquement au moyen de deux caissons de soufflage habituels. Les caissons de soufflage sont pourvus de buses de soufflage disposées en rangées, la distance séparant les rangées de buses de soufflage les unes des autres étant d'environ 8 cm, la distance réciproque entre deux buses dans les rangées de buses de soufflage étant de 3 cm et le diamètre de l'orifice des buses étant de 8 mm. La distance entre les orifices des buses et la surface de verre est d'environ 5 cm et la pression statique de l'air dans les caissons de soufflage est de 7,5 kPa ± 10%.

Des mesures de la résistance à la flexion/traction au niveau des vitres trempées suivant le procédé décrit dans la norme EN 12150 ont démontré des résistances à la flexion/traction des vitres de l'ordre de 210 ± 10 N/mm². Cette valeur correspond à une contrainte initiale de compression de surface d'environ 160 N/mm².

Des essais de tenue au feu conformes à la norme ISO/DIS 834-1 sont réalisés avec trois vitres du même type enchâssées dans le cadre sur une profondeur de 10 mm. Lors de deux essais de tenue au feu, les vitres résistent pendant 65 minutes au feu et lors du troisième essai de tenue au feu, les vitres résistent pendant 71 minutes. Ce vitrage coupe-feu remplit ainsi les conditions de la classe de résistance au feu G 60.

### Exemple 2.

Des vitres d'une épaisseur de 6 mm, présentant la même composition que celle des vitres de l'exemple 1, sont utilisées, ces vitres ayant également été fabriquées suivant le procédé de flottage. Le verre présente par conséquent les mêmes propriétés physiques que celui de l'exemple 1. Dans le cas présent, on soumet à un doucissage plusieurs vitres de 70 X 150 cm² au niveau de leurs bords et on les trempe par voie thermique dans les mêmes conditions que celles de l'exemple 1.

Des mesures de la résistance à la flexion/traction au niveau de ces vitres trempées donnent des valeurs de 250 ± 15 N/mm². Des essais de tenue au feu sont réalisés sur trois de ces vitres épaisses de 6 mm, enchâssées, lors de ces expériences, dans le cadre métallique sur une profondeur de 15 mm. Lors des trois essais de tenue au feu, le temps de résistance atteint plus de 90 minutes, de sorte que ces vitrages coupe-feu d'une épaisseur de 6 mm et d'une profondeur d'enchâssement dans le cadre de 15 mm satisfont à la classe de résistance au feu G 90.

### Exemple 3.

Pour la fabrication du vitrage coupe-feu, on utilise un verre de la composition suivante : 67,0% de SiO₂, 10,0% de CaO, 2,0% de MgO, 2,5% de SrO, 7,0% de Na₂O, 5,0% de K₂O, 1,0% de Al₂O₃, 5,5% de ZrO₂.

Ce verre présente les propriétés physiques suivantes :

| | |
|---|---|
| coefficient de dilatation thermique α₂₀₋₃₀₀ | = 7,9.10⁻⁶K⁻¹ |
| facteur de tension thermique ϕ | = 0,76 N/(mm².K) |
| module d'élasticité ε | = 7,7.10⁴ N/mm² |
| coefficient de Poisson µ | = 0,21 |
| point de ramollissement Ts | = 800°C |
| point de transformation Tw | = 1190°C |

On fabrique à partir du verre fondu une bande de verre d'une épaisseur de 8 mm suivant le procédé de flottage. Plusieurs vitres de dimensions 150 X 70 cm² sont soumises à un façonnage au niveau de leurs bords et trempées, comme décrit dans l'exemple 1, dans des installations de trempe à l'air habituelles.

Des mesures de la résistance à la flexion/traction au niveau des vitres trempées donnent des valeurs de 235 ± 10 N/mm².

Des essais de tenue au feu conformes à la norme citée sont réalisés avec trois vitres trempées du même type, épaisses de 8 mm et dans ce cas enchâssées dans le cadre métallique sur une profondeur de 22 mm. Lors des trois essais de tenue au feu, le temps de résistance atteint plus de 120 minutes, de sorte que ce vitrage coupe-feu satisfait aux conditions de la classe de résistance au feu G 120.

## Revendications

1. Vitrage résistant au feu des classes de résistance au feu G comprenant une vitre en verre au silicate trempée par voie thermique à l'air au moyen d'une installation de trempe traditionnelle et possédant des propriétés de verre de sécurité, ***caractérisé par*** l'utilisation de verres présentant un coefficient de dilatation thermique α₂₀₋₃₀₀ de 6 à 8,5.10⁻⁶K⁻¹, un facteur de tension thermique ϕ de 0,5 à 0,8N/(mm².K), un point de ramollissement (viscosité = 10^{7,6}dPa.s) de 750° à 830°C et un point de transformation (viscosité = 10⁴ dPa.s) de tout au plus 1190°C.

2. Vitrage résistant au feu suivant la revendication 1, ***caractérisé en ce que*** les verres utilisés présentent un coefficient de dilatation thermique α₂₀₋₃₀₀ de 6,5 à 7,5.10⁻⁶K⁻¹, un facteur de tension thermique ϕ de 0,6 à 0,7 N/(mm².K) et un point de ramollissement de 800° à 820°C.

3. Vitrage résistant au feu suivant la revendication 1, ***caractérisé par*** la composition de verre suivante en % en poids :
| | |
|---|---|
| SiO₂ | 73 - 76 |
| CaO | 11 - 13 |
| Na₂O | 10- 12 |
| K₂O | 0,1 - 0,5 |
| Al₂O₃ | 0,5 - 1,5 |

4. Vitrage résistant au feu suivant la revendications 1, ***caractérisé par*** la composition de verre suivante en % en poids :
| | |
|---|---|
| SiO₂ | 65 - 69 |
| CaO | 9 - 11 |
| MgO | 1 - 3 |
| SrO | 2 - 4 |
| Na₂O | 6 - 8 |
| K₂O | 4 - 6 |
| Al₂O₃ | 0,5 - 1,5 |
| ZrO | 4 - 6 |

5. Vitrage résistant au feu suivant l'une quelconque des revendications 1 à 4, ***caractérisé en ce que*** la vitre présente des contraintes initiales superficielles de compression de l'ordre de 120 à 200 N/mm², et de préférence de l'ordre de 150 à 190 N/mm².
